Europäisches Patentamt

European Patent Office

Office européen des brevets

(19)

(11) Publication number: **0 043 177**
**B1**

(12) EUROPEAN PATENT SPECIFICATION

(45) Date of publication of patent specification: **19.09.84**

(51) Int. Cl.³: **A 22 C 25/00**

(21) Application number: **81200751.6**

(22) Date of filing: **01.07.81**

(54) Method and apparatus for stripping flesh from fish frames.

(30) Priority: **02.07.80 GB 8021724**

(43) Date of publication of application:
**06.01.82 Bulletin 82/01**

(45) Publication of the grant of the patent:
**19.09.84 Bulletin 84/38**

(84) Designated Contracting States:
**BE DE FR GB IT NL SE**

(56) References cited:
**FR-A-2 007 580**
**GB-A- 137 027**
**GB-A- 736 013**
**US-A-1 757 013**
**US-A-1 793 189**
**US-A-3 729 775**

(73) Proprietor: **UNILEVER NV**
**Burgemeester s'Jacobplein 1 P.O. Box 760**
**NL-3000 DK Rotterdam (NL)**
(84) **BE DE FR IT NL SE**

(73) Proprietor: **UNILEVER PLC**
**Unilever House Blackfriars P O Box 68**
**London EC4P 4BQ (GB)**
(84) **GB**

(72) Inventor: **Cowie, William Pirie**
**17 Abbotswell Drive**
**Aberdeen (GB)**
Inventor: **Lawrence, Drummond Morgan**
**Proudley**
**Clachmaran Schoolhill Cullerlie**
**Aberdeenshire (GB)**
Inventor: **Goodlad, Morgan Henderson**
**19 Straik Place**
**Elrick Aberdeenshire (GB)**

(74) Representative: **Keppels, Willem Richard**
**Engelbertus Gerardus, Drs. et al**
**Unilever N.V. Patent Division P.O.Box 137**
**NL-3130 AC Vlaardingen (NL)**

Courier Press, Leamington Spa, England.

## Description

Hitherto flesh was stripped from fish carcasses by a cutting action, either manually or mechanically, to obtain boneless fish flesh. This filleting treatment is only applicable with rather big fishes as otherwise the obtained flesh would become too expensive. Accordingly, small fishes were previously comminuted and pressed through sieve means, thereby removing the bones but yielding an off-colour mince. The invention provides a method and apparatus for remedying this.

The invention relates to a method of treating a fish portion for separating the flesh from the frame, wherein it is passed between at least one pair of contra-rotating, parallel, resiliently-surfaced rollers. This method is known in the art and disclosed in US 1 793 189. The method is meant for removing flesh remaining on fish frames after a filleting treatment, consequently thought to be not suited for treating fish with skin on.

An object of the invention is to provide an economic method for obtaining a high quality fish product, devoid of bones, skin and off-colour, particularly suitable for relatively small fish as a starting material. To that end the invention provides a method as described, which is characterized in that a decapitated and gutted fish carcass, which is unskinned and still contains a backbone, is passed tail first between the squeeze rollers, the nip between which has such a width that the tail and the skin of said fish carcass is gripped sufficiently tightly for the skin and backbone to be drawn between the rollers without being significantly damaged and while the fish carcass is being drawn between the squeeze rollers flesh is expressed from the head end thereof.

It is highly desirable to pass the fish portion between at least two pairs of rollers, as is known from US—A—1 793 189. In order to obtain a better squeezing action of the squeezing rollers and a more reliable feed to these rollers the fish carcass is preferably first passed between a pair of contra-rotating, parallel pre-squeeze rollers, the nip between these being wider than that between the squeeze rollers.

The invention also relates to an apparatus for treating a fish portion for separating flesh from a fish frame, comprising a housing, feeding means for a fish portion, treating means comprising at least two pairs of contra-rotatably drivable parallel rollers, at least the second pair being coated with resilient material having a profiled surface and discharging means.

A similar apparatus is known from US—A—1 793 189, too and is provided with two sets of identical horizontal rollers. The upper roller of each set is spring loaded to contact the other one of said set with a predetermined presure. Dependent on the presence of an object having a certain rigidity, like a backbone of fish, the rollers will move away from each other and allow the passage of the object but squeeze away any soft material, like adhering fish flesh, that may be present. Feeding the objects between the rollers has to be done by hand with the inevitable risk of injuries. Additionally the flesh removed from the bones in not always separated from the bones. The apparatus of the invention remedies these drawbacks in that the rollers having upright axes and the first pair of rollers, viewed in the direction of transport, being at a greater distance than the second pair of rollers.

This apparatus enables a well oriented feed of fish portions without the risk of injuries, which feed can easily be mechanised. The upright position of the rollers guarantees that the flesh expressed from the fish or fish portion drops away from the rollers rather than being caught between them.

Although not essential it is desirable to have a further pair of rollers situated immediately behind the second pair of rollers, hereinafter referred to as squeeze rollers, and rotated in a similar contrary manner relative to each other, such that these rollers grip the tail of the fish portion emerging from between the squeeze rollers and assist in the passage of the skin and frame of the fish through the apparatus. This further pair of rollers is hereinafter referred to as discharge rollers.

A further desirable feature is a means for applying water either continuously or intermittently to the various pairs of rollers.

Application of the water can be, for example, by means of a jet or spray. The water assists in keeping the rollers clean and therefore maintaining their gripping qualities. It is generally desirable to ensure that excessive amounts of water do not become mixed with the flesh expressed from the fish, and therefore the provision of means for collecting and removing the water falling from the rollers is advantageous.

The squeeze rollers must have a degree of resilience sufficient to accommodate the naturally-varying cross-section of a typical fish and to accommodate the variations in size from one fish to another. We found that in general the squeeze rollers should be made of a material having a hardness in the range 20 to 40 on the Shore scale. With this consideration in mind, the squeeze rollers are best made from natural or synthetic rubber having a hardness in this range.

The surface texture of the squeeze rollers must be such that sufficient friction can be generated between the roller surfaces and the skin of a fish to draw the fish between the rollers, while not causing any significant damage to the skin. A surface featuring a multitude of small closely-spaced indentations or projections is very suitable. Alternatively, a multitude of grooves or ribs, arranged for example parallel to the cylindrical axis of the roller, can be used. These surface features can be moulded into the material from which the bulk of the roller is constructed, or can be imparted to the roller by means of a surface covering.

The pre-squeeze discharge rollers can be constructed of similar materials with similar surface properties. We have found, however, that a relatively more frictional surface on the discharge rollers is beneficial.

The physical size of the squeeze rollers may be varied depending upon the physical size of the fish to be processed using the invention. The process of the invention can be readily adapted for small, intermediate or large fish. Clearly factors such as the physical size of the rollers, their positioning relative to one another, and the speed with which a fish passes between the rollers may need adjustment according to the particular fish being handled.

In general, we have found that the squeeze rollers should have a diameter in the range 30 to 90 mm and a length in the range 60 to 250 mm.

The pre-squeeze rollers should ideally have a length the same as that of the squeeze rollers. The diameter of the pre-squeeze rollers is preferably substantially greater than that of the squeeze rollers, thus promoting maximum fish-roller contact. In general we have found that the pre-squeeze rollers should have diameters in the range 70 to 120 mm.

The discharge rollers should ideally have a length the same as that of the squeeze rollers. The diameter of the discharge rollers, however, is preferably substantially less than that of the squeeze rollers so that close proximity between the two pairs of rollers can be obtained. In general we have found that the discharge rollers should have diameters in the range 30 to 60 mm.

Ideally the apparatus of the invention should be constructed such that the distance between the cylindrical axes of the squeeze rollers can be adjusted readily, thus making the apparatus better able to be used in the processing of a wide range of fish sizes. Preferably, the pre-squeeze rollers and the discharge rollers are similarly adjustable.

Preferably, the squeeze rollers should be in contact with each other. With rollers of hardness 20—40 and preferably 30—35 on the "A" Shore scale, and a diameter of 50 to 90 mm, the cylindrical axes can be set so that the rollers are just touching, the resilience of the rollers then providing for passage of a fish between them. The more resilient the rollers, the closer can be the cylindrical axes to produce an effective pressure on a fish passing between the rollers.

Preferably, there is a gap between the pre-squeeze rollers, thus ensuring that their action on a fish passing between them is merely a mild squeeze and does not cause any significant expression of flesh from the fish in the manner intended during subsequent passage between the squeeze rollers. In general, this gap will be from about 2 to about 30 mm. The gap between the pre-squeeze rollers, when small fish such as blue whiting are being processed, will generally be about 4 to about 14 mm. For substantially larger fish, such as haddock, this gap will generally be about 16 to about 26 mm.

The discharge rollers should ideally be in contact with one another, to ensure that they grip adequately the tail of a fish emerging from between the squeeze rollers, thus drawing the spent skin and skeleton of the fish onwards through the apparatus.

The speed with which a fish passes between the various pairs of rollers should be constant, or preferably increasing slightly as the fish progresses through the apparatus. The speed of rotation of the rollers should be set accordingly. A typical throughput for small fish, such a blue whiting, fed continuously into the apparatus, can be up to about 100 fish per minute, but a throughput of 25 to 50 fish per minute would be more normal.

The extent to which relatively bone-free and skin-free flesh can be recovered from a fish by means of the invention depends to a considerable extent on the quality of the fish used and the manner in which the fish has been treated and prepared prior to rolling. It is obviously essential that the head and gut regions of the fish should be removed prior to rolling. It is also useful if the dorsal fins of the fish are cut off, as we have found that this can result in a smoother passage of the fish between the rollers and a lower incidence of ·backbone breakage. It can also be advantageous if the belly flaps of the fish are removed prior to rolling.

In the case of small fish such as blue whiting, small haddock, whiting and codling, the whole fish (minus head and guts can be processed as a single unit. Due to their small size, such fish are difficult to process economically by conventional filleting operations conducted either mechanically or by hand. In the case of larger fish, for example cod, it can be advantageous to "halve" the fish into "top" (head) and "tail" portions. The top portion can be processed using conventional techniques to yield high quality fillet material. The intact tail portion can be processed using the invention.

The invention will now be more particularly described with reference to the accompanying drawings, of which:

Figs 1, 2, and 3 illustrate diagrammatically the passage of a fish carcass between a pair of contra-rotating rollers;

Fig 4 represents a general plan view of a fish processing apparatus in accordance with the invention; and

Fig 5 represents a vertical cross-section of the apparatus depicted in Fig 4 taken on the line AA shown in Fig 4.

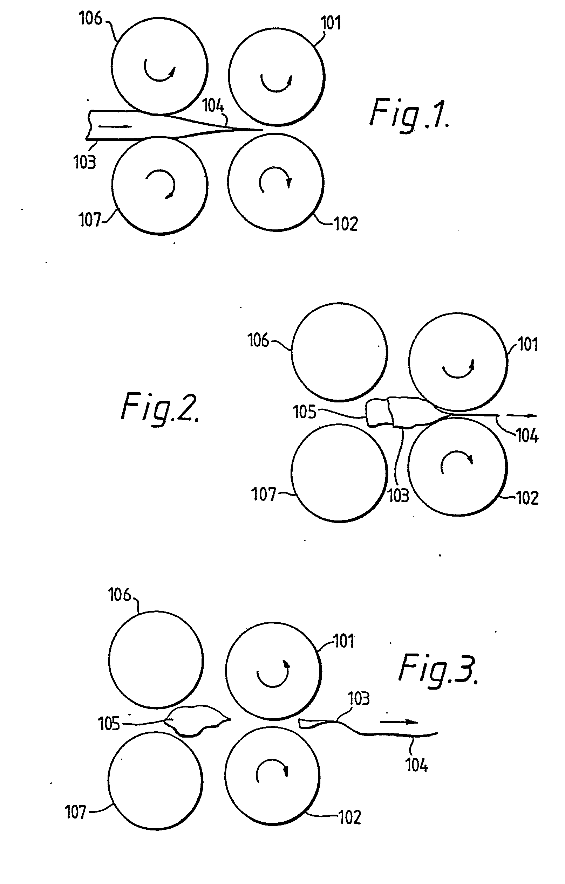

Figs 1 to 3 show a pair of parallel contra-rotating squeeze rollers 101 and 102, preceded by a pair of contra-rotating pre-squeeze rollers 106, 107, set at a wider nip distance, and illustrate the passage of a headed and gutted fish carcass 103 between the rollers. Tail 104 of fish 103 is presented to the pre-squeeze rollers, and on being gripped between the rollers and thereby slightly pressed passes through in the direction indicated between the squeeze rollers 101, 102. As the bulk of fish 103 contacts the squeeze rollers it is squeezed between them and the flesh 105 within the fish is expressed therefrom (Fig 2).

Fig 3 shows the final stage of the rolling procedure, with fish 103 (now comprising essentially merely the skin and backbone structure) having passed completely between the rollers and the flesh 105 remaining in front of the rollers.

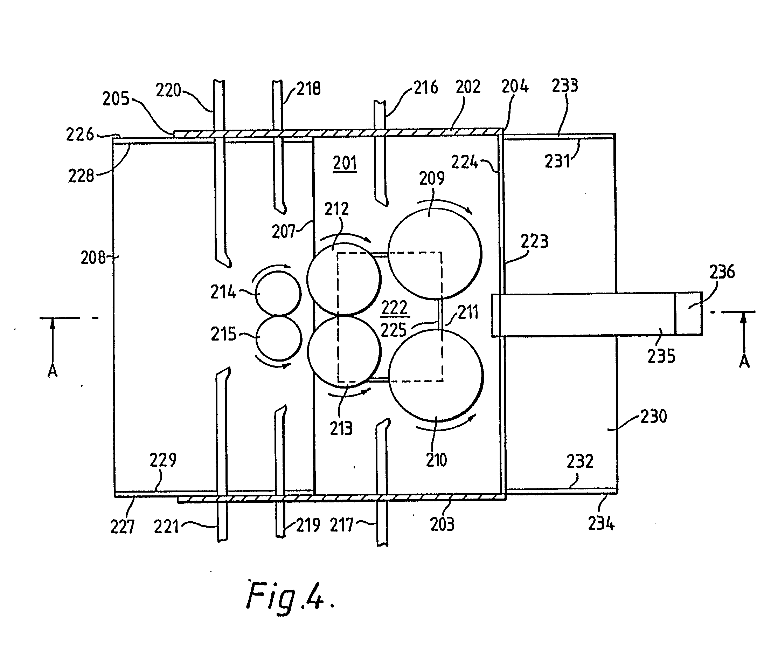

Fig 4 is a plan view showing the general layout of a fish processing apparatus according to the invention. The apparatus comprises a rectangular chamber 201, of which side walls 202 and 203 can be seen in section. Ends 204 and 205 of chamber 201 are open. A horizontal floor 206 spans the entire width of chamber 201, and extends slightly over half the length of the chamber from forward end 204. From the rear edge 207 of floor 206, a sloping chute 208 leads downwardly and outwardly from chamber 201. Chute 208 also spans the entire width of chamber 201.

The apparatus is provided with a pair of parallel pre-squeeze rollers 209 and 210 mounted with their longitudinal axes vertical, the pair of rollers being adjacent the forward end 204 of chamber 201, and being symmetrically arranged on either side of the centre line AA running through chamber 201. A narrow gap 211 exists between the pair of pre-squeeze rollers.

Immediately behind pre-squeeze rollers 209 and 210 are a pair of squeeze rollers 212 and 213, again mounted with their longitudinal axes vertical and similarly symmetrically arranged on either side of centre line AA. Squeeze rollers 212 and 213 contact one another. The diameter of squeeze rollers 212 and 213 is less than that of the pre-squeeze rollers 209 and 210. Behind squeeze rollers 212 and 213 are mounted a pair of discharge rollers 214 and 215, again with their longitudinal axes vertical and also symmetrically arranged on either side of centre line AA. Rollers 214 and 215 are also in contact with one another, and their diameters are less than those of squeeze rollers 212 and 213. Each roller is rotatable about its longitudinal axes in a contrary manner relative to its partner, and in such a manner that an object presented from forward end 204 of chamber 1 between the pre-squeeze rollers 209 and 210 will be drawn into chamber 201 and progressed in turn between the three pairs of rollers towards rear end 205.

A pair of water pipes 216 and 217 each terminating in a vertically-aligned V-jet spray head, lead into chamber 201 and are directed respectively against pre-squeeze rollers 209 and 210 such that water from the jets will impinge on the rear of each roller (relative to forward end 204 of chamber 201). A further pair of water pipes 218 and 219 lead into the apparatus and are directed via similar vertically-aligned V-jet spray heads against the rear of squeeze rollers 212 and 213. A third pair of water pipes 220 and 221 are similarly directed via similar spray heads against the rear of discharge rollers 214 and 215.

A rectangular aperture 222 exists in floor 206, and lies symmetrically beneath the pre-squeeze rollers 209 and 210, and the squeeze rollers 212 and 213 such that anything falling between the two pairs of rollers will drop below floor 206. Leading edge 223 of floor 206 is provided with an up-turned lip 224 which runs the entire width of the shelf. Another up-turned lip 225 runs round the entire edge of aperture 222. Side edges 226 and 227 of chute 208 are also provided with up-turned lips 228 and 229 respectively.

Below floor 206 is a second chute 230 which leads downwardly and outwardly from the front end 204 of chamber 201, commencing from the rear of aperture 222 such that anything falling through aperture 222 will land on chute 230 and be directed towards the front of the apparatus. Chute 230 is also provided with up-turned lips 231 and 232 along its side edges 233 and 234 respectively.

The apparatus is also provided with a feeder mechanism comprising an upper continuous belt 235 and a lower continuous belt 236 arranged in parallel one above the other along centre line AA at the forward end 204 of chamber 201. Lower belt 236 extends further from the chamber than does the upper belt.

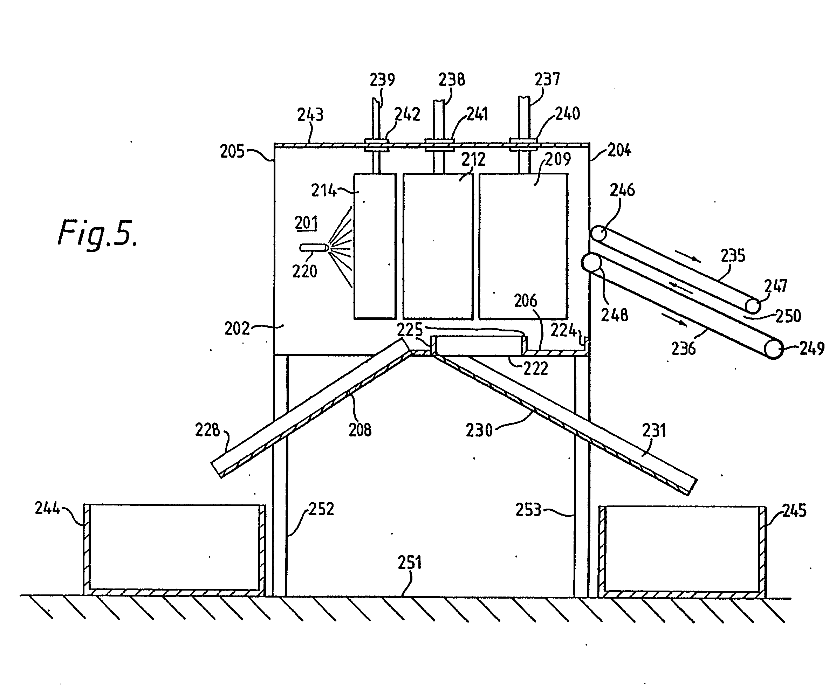

Referring to Fig 5, which illustrates a vertical cross-section of the apparatus taken on centre line AA shown in Fig 4, rollers 209, 212 and 214 can be seen within chamber 201. Each roller is mounted on a vertical shaft 237, 238 and 239 respectively, running through bearings 240, 241 and 242 respectively, situated in the roof 243 of chamber 201. The shafts are connected to a motor means (not shown) capable of causing rotation of each roller in the manner already described in relation to Fig 4. Water jet 220 playing onto the back of rollers 214 can also be seen.

Floor 206 with aperture 222 and rim 225 can be seen, as also can the two sloping chutes 208 and 230. The sloping chutes are depicted as leading down to trays 244 and 245 respectively, capable of catching any material sliding down each chute. The two continuous belts 235 and 236 comprising the feeder mechanism can also be seen. Belt 235 runs round a pair of horizontally mounted rollers 246 and 247. Belt 236 runs round a similar pair of horizontally mounted rollers 248 and 249.

The belts lead upwards into the open end 204 of chamber 201 adjacent the gap 211 between the pair of pre-squeeze rollers 209 and 210. A narrow gap 250 exists between the two belts along their entire adjacent length. The belts 235 and 236 can be driven via their respective rollers by a motor means (not shown), such that they run in a contrary manner and any material placed between the belts will be drawn between them upwards into the apparatus. The whole apparatus is depicted as standing on ground 251 by means of a legs mounted one at each corner, only the farther two of which legs (252 and 253) can be seen in this cross-section.

In operation, the three pairs of rollers within the apparatus are set in rotational motion and the belts are also set running. Water is fed via the inlet pipes to the jets and played onto the rear of each roller. Headed and gutted but otherwise whole fish carcasses are fed tail first between the two belts, which convey the carcasses upwards into the gap 211 between the pre-squeeze rollers 209 and 210, which apply relatively gentle pressure to each fish carcass and soften up the muscle structure. The continuous rotation of the pre-squeeze rollers progresses the fish carcass towards the pair of squeeze rollers 212 and 213 which tightly grip the tail of the fish and draw the fish between them. As the tail of the fish emerges from between the squeeze rollers it is engaged between the discharge rollers 214 and 215 which actively continue the progress of the carcass through the apparatus. As the fish carcass passes between the squeeze rollers it is subject to considerale pressure, and the flesh within the carcass is separated from the skin and bone structure and is extruded fron the head end of the carcass. The extruded flesh falls through aperture 222 onto forwardly sloping chute 230, and slides down into the waiting tray 245. The spent skin and bone structure of the carcass is discharged from the apparatus after passing between the discharge rollers by sliding down rearwardly sloping chute 208 into the other waiting tray 244. The continuous jets of water playing onto the rollers help in keeping each roller clean of fish flesh and slime from the fish skin, and thereby ensuring that the rollers maintain an adequate grip on each carcass and that the valuable fish flesh collected in tray 245 is not unduly contaminated with unwanted low-grade material. The water from each jet cascades down each roller onto floor 206 and then down rear chute 208. The up-turned lips 224 and 225 around the leading edge 223 of floor 206 and around aperture 222 help to prevent undue amounts of water becoming mixed with the valuable fish flesh.

An additional or alternative means of ensuring that the fish flesh collected does not have an excessive water content, is to use a foraminous material, such as an expanded metal screen, as the floor of the chute 230. Water can fall through the holes while the fish flesh slides down the chute into the waiting tray 245.

Example

An apparatus according to the invention and basically as just described with reference to Figs 4 and 5, was used to recover flesh from blue whiting.

The apparatus had the following technical specification.

The pre-squeeze rollers were constructed of rubber having a hardness of 30 on the Shore scale, moulded onto 20 mm stainless steel shafts. Each roller had a length of 150 mm and a diameter of 90 mm. A textured surface, comprising a non-slip vinyl sheet material recommended for use as a deck covering for yachts, was bonded to each roller. A gap of 5 mm existed between the pre-squeeze rollers.

The squeeze rollers were of identical construction to the pre-squeeze rollers, except that they had a diameter of 70 mm, and were just in contact with one another.

The discharge rollers were constructed of rubber having a hardness of 35 on the Shore scale, moulded onto 15 mm diameter stainless steel shafts. Each roller had a length of 150 mm and a diameter of 40 mm. They were covered with the same non-slip material and were just in contact with one another.

Gutted frozen-at-sea blue whiting were thawed, and headed manually. 200 kilos of fish were processed in the apparatus in 1 hour 45 minutes, and 70 kilos of acceptable flesh recovered, giving a yield of 35%.

**Claims**

1. A method of treating a fish portion for separating the flesh from the frame wherein it is passed between at least one pair of contra-rotating, parallel, resiliently-surfaced rollers, characterised in that a decapitated and gutted fish carcass, which is unskinned and still contains the backbone, is passed tail first between the squeeze rollers, the nip between which has such a width that the tail and the skin of said fish carcass is gripped sufficiently tightly for the skin and backbone to be drawn between the rollers without being significantly damaged and while the fish carcass is being drawn between the squeeze rollers flesh is expressed from the head end thereof.

2. The method of claim 1, characterised in that the fish carcass is passed between at least two subsequent pairs of rollers, the first pair of which is a pair of contra-rotating, parallel pre-squeeze rollers, the nip between these being wider than that between the following pair(s) of squeeze rollers.

3. The method of claim 1 or 2, characterised in that the dorsal fin and the belly flaps are removed prior to passing the fish carcass between the rollers.

4. An apparatus for treating a fish portion for separating flesh from a fish frame comprising a housing, feeding means for a fish portion, treating means comprising at least two pairs of contra-rotatably drivable parallel rollers (209, 210; 212, 213) at least the second pair (212, 213) being coated with a resilient material having a profiled surface and discharging means, characterised by the rollers having upright axes and the first pair of rollers (209, 210), viewed in the direction of transport, being at a greater distance than the second pair of rollers (212, 213).

5. The apparatus of claim 4, characterised in that after the second pair (212, 213) of rollers a third pair of parallel discharge rollers (214, 215) is situated, drivable in a similar contra-rotatable manner to the first and second pairs.

6. The apparatus of claim 4 or 5, characterised in that the rollers are only supported at their upper extremity (237, 238, 239).

7. The apparatus of claim 4, characterised in that the squeeze rollers (212, 213) have a diameter in the range of 30 to 90 mm and the pre-squeeze rollers (209, 210) have a diameter in the range of 70 to 120 mm.

8. The apparatus of claim 4, characterised in that the squeeze rollers (212, 213) have a surface hardness of 20 to 40 and preferably 30 to 35 on the "A" Shore scale.

## Revendications

1. Procédé pour traiter du poisson pour séparer la chair du squelette, dans lequel le poisson passe entre au moins deux rouleaux à surface élastique parallèles tournant en sens opposé, caractérisé en ce qu'on fait passer un poisson étêté et étripé, qui n'est pas dépouillé et qui comporte encore sa grande arête, queue en avant, entre les rouleaux de compression, l'emprise entre ces rouleaux ayant une largeur telle que la queue et la peau du poisson soient saisies suffisamment fermement pour que la peau et la grande arête soient entraînées entre les rouleaux sans être sensiblement endommagées et pendant que le poisson est entraîné entre les rouleaux de compression, la chair est exprimée au dehors par son extrémité de tête.

2. Procédé suivant la revendication 1, caractérisé en ce qu'on fait passer le poisson entre au moins deux paires de rouleaux suivantes, la première paire de rouleaux étant une paire de rouleaux de pré-compression parallèles tournant en sens opposé et l'emprise de ces rouleaux étant plus large que celle(s) prévue(s) entre la ou les paires suivantes de rouleaux.

3. Procédé suivant la revendication 1 ou 2, caractérisé en ce qu'on enlève les nageoires dorsales et les nageoires ventrales avant de faire passer le poisson entre les rouleaux.

4. Appareil pour traiter un poisson afin de séparer la chair d'un squelette comprenant une enceinte, un dispositif d'alimentation pour du poisson, un dispositif de traitement comprenant au moins deux paires de rouleaux (209, 210; 212, 213) parallèles pouvant être entraînés en sens opposé, les rouleaux (212, 213) de la seconde paire au moins étant revêtus d'une matière élastique présentant une surface profilée et un dispositif d'évacuation, caractérisé en ce que les rouleaux présentent des axes verticaux et les rouleaux (209, 210) de la première paire, vu dans le sens du transport, sont espacés d'une plus grande distance que les rouleaux (212, 213) de la seconde paire.

5. Appareil suivant la revendication 4, caractérisé en ce que la deuxième paire (212, 213) de rouleaux est suivie d'une troisième paire de rouleaux d'évacuation parallèles (214, 215) entraînés en sens opposé de la même manière que les rouleaux de la première et de la deuxième paire.

6. Appareil suivant la revendication 4 ou 5, caractérisé en ce que les rouleaux ne sont supportés qu'à leurs extrémités supérieures (237, 238, 239).

7. Appareil suivant la revendication 4, caractérisé en ce que les rouleaux de compression (212, 213) ont un diamètre compris entre 30 et 90 mm et les rouleaux de précompression (209, 210) ont un diamètre compris entre 70 et 120 mm.

8. Appareil suivant la revendication 4, caractérisé en ce que les rouleaux de compression (212, 213) ont une dureté superficielle de 20 à 40 et de préférence de 30 à 35 sur l'échelle Shore "A".

## Patentansprüche

1. Verfahren zum Behandeln eines Fischstückes zum Trennen des Fleisches vom Skelett, wobei es zwischen zumindest ein Paar von gegenläufig rotierenden, parallelen, mit elastischen Oberflächen versehenen Walzen geführt wird, dadurch gekennzeichnet, daß ein geköpfter und ausgenommener Fischrumpf, der ungehäutet ist und noch das Rückgrat enthält, mit dem Schwanz voran zwischen die Quetschwalzen geführt wird, deren Walzenspalt eine derartige Breite hat, daß der Schwanz und die Haut des Fischrumpfes ausreichend fest ergriffen werden, damit die Haut und das Rückgrat zwischen den Walzen durchgezogen werden, ohne daß sie wesentlich beschädigt werden, und daß Fleisch, während der Fischrumpf zwischen die Quetschwalzen gezogen wird, von dessen Kopfende ausgepreßt wird.

2. Verfahren nach Anspruch 1, dadurch gekennzeichnet, daß der Fischrumpf zwischen zumindest zwei aufeinanderfolgende Walzenpaare geführt wird, von denen das erste Paar ein Paar von gegenläufig rotierenden, parallelen Vorquetschwalzen ist, deren Walzenspalt breiter als jener des oder der folgenden Paare(s) Quetschwalzen ist.

3. Verfahren nach Anspruch 1 oder 2, dadurch gekennzeichnet, daß die Rückenflosse und die Bauchlappen entfernt werden, bevor der Fischrumpf zwischen die Walzen geführt wird.

4. Vorrichtung zum Behandeln eines Fischstückes zum Trennen von Fleisch von einem Fischskelett, mit einem Gehäuse, Zuführmitteln für ein Fischstück, Behandlungsmitteln mit zumindest zwei Paaren von gegenläufig rotierbar antreibbaren, parallelen Walzen (209, 210; 212, 213), wobei zumindest das zweite Paar (212, 213) mit elastischem Material überzogen ist, das eine profilierte Oberfläche aufweist, und mit Abgabemitteln, gekennzeichnet dadurch, daß die Walzen aufrechte Achsen haben, und das erste Paar Walzen (209, 210), gesehen in Transportrichtung, in einem größeren Abstand vorliegt als das zweite Paar Walzen (212, 213).

5. Vorrichtung nach Anspruch 4, dadurch gekennzeichnet, daß hinter dem zweiten Paar (212, 213) Walzen ein drittes Paar von parallelen Abgabewalzen (214, 215) angebracht ist, das in einer dem ersten und zweiten Paar ähnlichen gegenläufig rotierbaren Weise antreibbar ist.

6. Vorrichtung nach Anspurch 4 oder 5, dadurch gekennzeichnet, daß die Walzen nur an ihrem oberen Ende (237, 238, 239) gehalten wird.

7. Vorrichtung nach Anspruch 4, dadurch gekennzeichnet, daß die Quetschwalzen (212, 213) einen Durchmesser im Bereich von 30 bis 90 mm und die Vorquetschwalzen (209, 210) einen Durchmesser im Bereich von 70 bis 120 mm aufweisen.

8. Vorrichtung nach Anspruch 4, dadurch gekennzeichnet, daß die Quetschwalzen (212, 213) eine Oberflächenhärte von 20 bis 40 und vorzugsweise 30 bis 35 gemäß der "A"-Shore-Härteskala aufweisen.

Fig.1.

Fig.2.

Fig.3.

Fig.4.

Fig.5.